# EUROPÄISCHE PATENTSCHRIFT

(11) **EP 3 760 764 B1**
(45) Veröffentlichungstag und Bekanntmachung des Hinweises auf die Patenterteilung: **15.05.2024**
(21) Anmeldenummer: 19183556.0
(22) Anmeldetag: 01.07.2019
(51) Int. Cl.: C25B 1/02, C25B 1/04, F04B 9/131, F17C 7/00

(54) **VERFAHREN UND VORRICHTUNG ZUR HYDROPNEUMATISCHEN VERDICHTUNG VON GASEN FÜR POWER-TO-GAS-ANWENDUNGEN**
METHOD AND DEVICE FOR HYDROPNEUMATIC COMPRESSION OF GASES FOR POWER TO GAS APPLICATIONS
PROCÉDÉ ET DISPOSITIF DE COMPRESSION HYDROPNEUMATIQUE DE GAZ POUR DES APPLICATIONS DE CONVERSION ÉLECTRICITÉ EN GAZ

(43) Veröffentlichungstag der Anmeldung: 06.01.2021
(73) Patentinhaber: Prüf- und Forschungsinstitut Pirmasens e.V., 66953 Pirmasens (DE)
(72) Erfinder: Pacan, Benjamin, 66957 Trulben (DE); Schultheis, Peter, 66871 Pfeffelbach (DE); Schadewell, Christian, 66978 Merzalben (DE)
(74) Vertreter: Patentanwälte Dr. Keller, Schwertfeger Partnerschaft mbB

(56) Entgegenhaltungen:
- EP-A1- 2 746 641
- WO-A1-2018/033951
- DE-A1-102015 007 732
- GB-A- 2 464 784
- RU-C1- 2 042 050
- US-A1- 2012 125 779
- Anonymous: "Pneumatic-Driven Gas Boosters | Haskel", , 3. Oktober 2018 (2018-10-03), XP055655712, Gefunden im Internet: URL:https://web.archive.org/web/2018100317 0600/https://www.haskel.com/products/gas-b oosters/pneumatic-driven-gas-boosters/ [gefunden am 2020-01-08]

## Beschreibung

Die vorliegende Erfindung betrifft ein Verfahren und eine Vorrichtung zur Verdichtung eines Gases oder eines Gasgemisches. Das Verfahren und die Vorrichtung sind insbesondere für diverse Power-to-Gas-Anwendungen einsetzbar.

In der industriellen Prozesstechnik bleiben viele natürliche Energiequellen häufig ungenutzt. Für volatile Energiequellen (z.B. Windkraft, Photovoltaik) werden wiederum zunehmend effiziente Energiespeicher benötigt, bei denen die elektrische Überschussenergie effizient und über einen langen Zeitraum (z.B. mehrere Monate) gespeichert werden kann. Eine sehr aussichtsreiche Speichertechnologie ist die Druckelektrolyse von Wasser zu Wasserstoff und Sauerstoff mit einer sich anschließenden Methanisierung des Wasserstoffs und Speicherung im Erdgasnetz. Die aus dem elektrischen Strom stammende potentielle Energie ermöglicht beispielsweise den Gastransport in die Gasnetze und zu den Verbrauchern, ohne dass eine zusätzliche, ineffiziente exotherme Verdichtung erforderlich ist. Bei einer Druckelektrolyse werden Wasserstoff und Sauerstoff mit hoher Reinheit erzeugt, wobei die Produktgase Wasserstoff und Sauerstoff mit einem Druck von 30 bar oder mehr zur Verfügung stehen. Dies hat den Vorteil, dass für die meisten Anwendungen auf einen nachgeschalteten Kompressor (Verdichter) verzichtet werden kann.

Beim Power-to-Gas Verfahren wird überschüssiger Strom dazu verwendet, in einem ersten Schritt durch die Elektrolyse von Wasser Wasserstoff zu produzieren und bei Bedarf in einem weiteren Schritt unter Verwendung von Kohlenstoffdioxid (CO₂) in Methan umzuwandeln. Eine mögliche Power-to-Gas-Anwendung umfasst die Umwandlung regenerativ erzeugter elektrischer Energie in chemische Energie und deren Speicherung im verfügbaren Gasnetz in Form verschiedener Gase. Hierfür wird Wasser zunächst in Wasserstoff und Sauerstoff gespalten, unter Zugabe von Kohlenstoffdioxid methanisiert und schließlich ins Erdgasnetz eingespeist. Anschließend kann dieser Brennstoff beispielsweise zur Stromerzeugung in Gaskraftwerken oder Blockheizkraftwerken genutzt werden. Alternativ kann der Wasserstoff zusammen mit zuvor aus Industrieprozessen abgeschiedenem oder aus der Luft gewonnenem Kohlenstoffdioxid in Methangas umgewandelt werden. Das gewonnene Methan kann anschließend teilweise oder vollständig in das Gasnetz eingespeist oder in Gasspeichern gespeichert werden. Energiewirtschaftlich und ökologisch sinnvoll ist die Nutzung der Power-to-Gas-Technologie, wenn für die Herstellung Stromüberschüsse aus erneuerbaren Energien verwendet werden. Der Einsatz von Graustrom aus fossilen Energien würde die Emissionen vervielfachen statt senken und wäre damit energetisch und ökologisch kontraproduktiv. Das so erzeugte Synthesegas wird deshalb auch häufig als EE-Gas bezeichnet.

Bislang wurde die potentielle Energie der Elektrolysegase für nachfolgende Prozesse, wie beispielsweise die Methanisierung von Wasserstoff oder die Bereitstellung von Druckluft für die Sauerstoffbegasung bei aeroben Abwasserreinigungsprozessen, nicht genutzt. Für die Methanisierung von Wasserstoff müssen in der Regel kohlendioxidhaltige Gase (z. B. Biogas, Verbrennungsabgase) auf ein höheres Druckniveau (in der Regel zwischen 6 und 10 bar) gebracht werden. Dies erfolgt bislang durch den Einsatz von Verdichtern und dem Eintrag zusätzlicher elektrischer Energie. Die freiwerdende thermische Energie wurde hierbei ebenfalls nicht oder kaum genutzt.

Bei der aeroben Abwasserbehandlung ist eine Kompression von Luft erforderlich. Der für die Komprimierung erforderliche Druck ist u. a. abhängig von der Beckentiefe und dem Beckenvolumen. Gewöhnlich erfolgt eine solche Verdichtung über spezielle Gassysteme, die äußerst energieaufwändig sind und bis zu 30 % des Strombedarfs einer Kläranlage ausmachen können. Auch hierbei werden die Prozesse nicht in energieoptimierter Weise geführt. Dabei ist für eine effiziente Energiespeicherung eine optimierte Nutzung der zur Verfügung stehenden Energie, aber auch freiwerdender thermischer Energie, unerlässlich. Insgesamt sind bei der Druckelektrolyse von Wasserstoff und Sauerstoff, der Methanisierung von Wasserstoff und der Bereitstellung von Sauerstoff für aerobe Abwasserbehandlung noch deutliche Wirkungsgradsteigerungen möglich, da die vorhandenen Energiepotentiale nicht genutzt werden.

Eine Vorrichtung und ein Verfahren zur Erzeugung von mechanischer Energie aus Wärmeenergie ist bereits aus der DE 443 25 59 C2 bekannt. Dabei soll ein Arbeitsstoff verdampft und verflüssigt werden und der entstehende Quelldampf mit einem Verdichter verdichtet werden, wobei ein Druckübersetzer zum Einsatz kommt, der zur Erzeugung mechanischer Energie aus dem verdichteten Arbeitsstoff dient. Derartige Druckübersetzer sind beispielsweise auch aus der EP 0193 498 A2, EP 0064 177 B1, US-A-4345880, EP 1 362 629 A1, US-PS 5 071 453 und US-PS 5 354 361 bekannt. Druckübersetzer werden dort eingesetzt, wo hohe Drücke erforderlich sind, insbesondere bei kurzen Hüben. Ziel ist die Änderung eines ersten Arbeitsdruckes zu einem zweiten Arbeitsdruck, wobei sich die Drücke wie die Flächen der beiden Kolben für den Primärdruck bzw. Sekundärdruck verhalten. Dabei wird auf einen Kolben mit einer größeren Fläche ein pneumatischer Druck ausgeübt, wodurch an dem Kolben mit der geringeren Fläche ein größerer Druck entsteht. Damit lassen sich Drücke im Verhältnis von 1:40 erzeugen. Typische Einsatzgebiete liegen beispielsweise beim Stanzen, Prägen, Signieren, Tiefziehen, Spannen, Schälen, Biegen oder Richten. Letztendlich wird jedoch auch bei Gasen mit unterschiedlichen Druckniveaus die darin liegende Energie nicht genutzt, insbesondere wenn eine Expansion eines Speichergases auf den erforderlichen Betriebsdruck durchgeführt wird. Die frei werdende Energie bleibt ungenutzt.

Die EP 2 746 641 A1 beschreibt ein Verfahren und eine Vorrichtung zur Behandlung von Gas unter Verwendung von einer oder mehreren Kompressionsstufen, bei denen über einen Kolben das Gas in einer Kompressionskammer komprimiert wird und das so komprimierte Gas anschließend unter Kühlung expandiert wird.

Die GB 2 464 784 A beschreibt ein Verfahren zur Verdichtung eines Gases oder eines Gasgemisches, bei dem ein Produktgas durch einen Gasdruckerhöher geleitet wird, wobei der Gasdruckerhöher beispielsweise durch Sauerstoff oder Wasserstoff als Antriebssubstanz angetrieben wird. Der Sauerstoff und Wasserstoff werden über eine Elektrolyse erzeugt.

Die WO 2018/033951 A1 beschreibt eine Elektrolysevorrichtung zur Elektrolyse von Wasser oder Dampf zur Erzeugung von Wasserstoffgas und Sauerstoffgas mit einem höheren Druck als dem atmosphärischen Druck, wobei eine Kompressionseinheit zum Komprimieren von Gas unter Verwendung der Druckenergie des Sauerstoffgases vorgesehen ist. Ähnliche Verfahren sind auch beschrieben in der DE 10 2015 007 732 A1, US 2012/125779 A1, RU 2042050 C1.

Vor diesem Hintergrund ist es Aufgabe der vorliegenden Erfindung, ein energieoptimiertes Verfahren und eine Vorrichtung zur Verdichtung eines Gases oder eines Gasgemisches bereitzustellen, welches insbesondere für die Nutzung der potentiellen Energie der Druckniveaus von Elektrolysegasen bei einer Druckelektrolyse verwendbar ist.

Diese Aufgabe wird gelöst durch ein Verfahren mit den Merkmalen des Anspruchs 1 sowie einer Vorrichtung mit den Merkmalen des Anspruchs 10. Bevorzugte Ausführungsvarianten finden sich in den Unteransprüchen wieder.

Bei dem erfindungsgemäßen Verfahren werden unterschiedliche Druckniveaus von Gasen ausgenutzt, um ein erstes Gas oder Gasgemisch mit einem höheren Druckniveau zu expandieren, während ein zweites Gas oder Gasgemisch mit einem gegenüber dem ersten Gas oder Gasgemisch niedrigeren Druckniveau komprimiert wird. Auf diese Weise werden die Druckniveaus der beiden Gase bzw. Gasgemische angenähert. Die frei werdende Energie kann für unterschiedliche nachgeschaltete Prozesse verwendet werden. Das Verfahren funktioniert natürlich auch bei mehr als zwei Gasen und Gemischen, beispielsweise im Rahmen einer Serienschaltung.

Bei dem erfindungsgemäßen Verfahren wird zunächst ein erstes Gasgemisch (B) bereitgestellt, dessen Druckniveau niedriger ist als das Druckniveau eines zweiten Gases oder Gasgemisches (A), wobei die aus der Expansion des sich auf dem höheren Druckniveau befindenden zweiten Gases oder Gasgemisches (A) gewonnene Energie zum Verdichten des ersten Gases oder Gasgemisches genutzt wird. Die Erfindung ist dadurch gekennzeichnet, dass die Verdichtung über wenigstens eine Antriebseinheit erfolgt, die von dem zweiten Gas oder Gasgemisch (A) angetrieben wird und das erste Gas oder Gasgemisch (B) über eine fluidische Kopplung in einer oder mehreren Kompressionseinheiten verdichtet wird, indem die Übertragung der mechanischen Leistung der wenigstens einen Antriebseinheit an die Kompressionseinheit über eine mechanische Kopplung erfolgt.

Die Erfindung ist dadurch gekennzeichnet, dass (i) es sich bei dem ersten Gas oder Gasgemisch (B) um Biogas oder ein CO₂-haltiges Gas und dem zweiten Gas oder Gasgemisch (A) um Wasserstoff für die Methanisierung handelt, und/oder (ii) es sich bei dem ersten Gas oder Gasgemisch (B) um Sauerstoff und dem zweiten Gas oder Gasgemisch (A) um Luft für die Gewinnung von Druckluft, zur Sauerstoffbegasung und/oder zur Ozonerzeugung handelt.

Unter dem Begriff "Antriebseinheit" wird gemäß der Erfindung eine technische Einrichtung verstanden, die durch Energieumsatz mechanische Leistung in Form von linearen Bewegungen, Drehbewegungen, Kräften und/oder Drehmomenten erzeugt.

Unter dem Begriff "Kompressionseinheit" wird gemäß der Erfindung eine technische Einrichtung verstanden, die durch Energieumsatz Gas von einem höheren auf ein niedrigeres Volumen komprimiert und auf damit auf ein höheres Druckniveau hebt.

Unter dem Begriff "Verdichtungseinrichtung" wird gemäß der Erfindung die Gesamtheit aus Antriebseinheit und Kompressionseinheit sowie eventuell vorhandenem Nachverdichter und notwendigen Nebenaggregaten verstanden.

Unter dem Begriff "mechanischen Leistung" wird gemäß der Erfindung eine physikalische Leistung verstanden, die in Form von Bewegung und Kraft oder Drehbewegung und Drehmoment übertragen wird.

Unter dem Begriff "mechanische Kopplung" wird gemäß der Erfindung eine mechanisch ausgeführte formgebundene Verbindung von Bewegungselementen verstanden, beispielsweise in Form einer Welle, bei welcher zugeführte mechanische Leistung konstruktiv ohne zwischengeschaltete kompressible Medien oder schlupfbehaftete elektrische Felder in abgeführte mechanische Leistung gewandelt wird.

Unter dem Begriff "fluidische Kopplung" wird gemäß der Erfindung eine Verbindung von Bewegungselementen verstanden, beispielsweise in Form einer Pneumatikleitung oder einer Hydraulikleitung, bei welcher zugeführte mechanische Leistung durch die Bewegung fluidischer Stoffe, also Gasen oder Flüssigkeiten, in abgeführte mechanische Leistung gewandelt wird.

Der Begriff "Druckniveau" bezeichnet gemäß der Erfindung den physikalischen Druck in einem bestimmten Volumen oder Raum.

Ein erstes Gas oder Gasgemisch bezeichnet ein Gas oder Gasgemisch, das gegenüber einem zweiten (oder weiteren) Gasgemisch einen niedrigeren Druck aufweist. Erfindungsgemäß wird das Gas oder Gasgemisch mit dem höheren Druck (also das zweite oder weitere Gas/Gasgemisch) entspannt und das Gas oder Gasgemisch mit dem niedrigeren Druck (also das erste Gas/Gasgemisch) komprimiert bzw. verdichtet.

Vorzugsweise kommen bei dem erfindungsgemäßen Verfahren Druckübersetzer zum Einsatz, damit ein Gas oder Gasgemisch auf einem hohen Druckniveau bei seiner kontrollierten Expansion (Entspannung) ein weiteres Gas oder Gasgemisch mit niedrigerem Druckniveau verdichtet. Beide Gase können auf einem mittleren Druckniveau vermischt und einem nachgeschalteten Prozess, beispielsweise einem chemisch physikalischen oder biotechnologischen Prozess zugeführt werden.

Zur Energieoptimierung können sowohl isotherme Entspannungs- bzw. Verdichtungsprozesse oder auch die Auskopplungen von Wärme und Kälte realisiert werden. Bei den erfindungsgemäß eingesetzten Druckübersetzern wird eine Bewegung eines Kolbens, eines Zylinders (z.B. eines Antriebszylinders) infolge einer Druckbeaufschlagung durch eine mechanische Verbindung dieses Kolbens mit einem Übersetzungskolben eines Druckzylinders (d.h. eines kleineren Kolbens) auf den Übersetzungskolben des Druckzylinders übertragen. Dabei weist der Übersetzungskolben des Druckzylinders eine geringere Fläche auf als der Kolben des Zylinders, der mit dem Druck beaufschlagt wird. Zur Druckübertragung können verschiedene Medien verwendet werden, beispielsweise Druckluft, Öl, Wasser oder auch sonstige Gase und Flüssigkeiten. Dabei können auch unterschiedliche Medien auf der Seite des geringen Druckes gegenüber der Seite mit dem hohen Druck zum Einsatz kommen. Vorzugsweise kommen anstelle eines Zylinders mit einem Kolben auf der Seite mit niedrigem Druck mehrere Zylinder mit mehreren Kolben zum Einsatz. Vorzugsweise handelt es bei den erfindungsgemäßen Gasen oder Gasgemischen um Prozessgase, technische Gase oder Druckluft. Ein bevorzugtes Gasgemisch ist Luft, bevorzugte Gase sind Wasserstoff oder Sauerstoff in beliebigem Reinheitsgrad.

Vorzugsweise treibt das sich gegenüber dem ersten Gas oder Gasgemisch (B) auf einem höheren Druckniveau befindliche zweite Gas bzw. Gasgemisch (A) einen Antriebszylinder an, der über eine mechanische oder eine fluidische Kopplung in einem oder mehreren Verdichtungszylindern das erste Gas oder Gasgemisch (B) verdichtet. Falls die, beim Expandieren des zweiten Gases oder Gasgemisches (A) frei werdende mechanische Leistung für eine ausreichend hohe Verdichtung des ersten Gases oder Gasgemisches (B) nicht ausreicht, wird das erste Gas oder Gasgemisch (B) über eine, vorzugsweise hydraulisch ausgeführte, Nachverdichtung auf den vorgesehenen Ausgangsdruck gebracht. Auf diese Weise wird dem zweiten Gas oder Gasgemisch (A) im Mittel immer gerade so viel Leistung entnommen, dass der Ausgangsdruck (pOA) des zweiten Gases oder Gasgemisches (A) bei dem vorgesehenen Ausgangsvolumenstrom (QA) gerade aufrechterhalten werden kann. Dabei wird die im Antriebsgas des zweiten Gases oder Gasgemisches (A) über Druck gespeicherte potentielle Energie immer optimal ausgenutzt. In einer Variante kann es sich bei dem Gasgemisch auch um ein Gemisch der beiden Gase A und B handeln, also um ein Gasgemisch AB mit einem Ausgangsdruck pOAB.

Die Verdichtung und/oder Expansion des Gases oder Gasgemisches erfolgt vorzugsweise doppelwirkend, d.h. jeweils eine Kolbenseite treibt den Antriebszylinder an und führt zu der gewünschten Verdichtung im Verdichtungszylinder, während gleichzeitig auf der anderen Kolbenseite entleert bzw. angesaugt wird.

Vorzugsweise erfolgt die erfindungsgemäße mechanische Kopplung bei der Leistungsübertragung über verbindende starre Wellen. Alternativ kann auch eine hydraulische Kopplung erfolgen, wenn Antriebszylinder und/oder Verdichtungszylinder eine direkte mechanische Kopplung nicht zulassen. Über entsprechend angeordnete und geschaltete Ventile auf der Antriebsseite und auf der Kompressionsseite wird das zu expandierende Gas oder Gasgemisch derart gesteuert, dass in beide Hubrichtungen Verdichtungen erfolgen. Über zu- und abschaltbare zusätzliche Verdichtungszylinder werden die Volumenströme der Ausgangsgase entsprechend den gewünschten Mischungsverhältnissen bereitgestellt. Damit ist eine Prozessführung auch bei Änderungen der zur Verfügung stehenden Mengen und Druckniveaus der Eingangsgase sichergestellt, um prozesssicher kontinuierliche Volumenströme und Drücke der Ausgangsgase zur Verfügung zu stellen.

Vorzugsweise werden zwei oder mehrere Ausgangsgase als verdichtetes Gasgemisch in einem variabel einstellbaren Mischungsverhältnis auf einem definierten Druckniveau an einen nachgeschalteten Verbraucher abgegeben. Alternativ können die Eingangsgase getrennt auf den jeweils definierten Druckniveaus an die nachgeschalteten Verbraucher abgegeben werden. Dies wird in vorteilhafter Weise zum einen über eine Zuschaltung von weiterem Verdichtungsvolumen über weitere Verdichtungszylinder und/oder zum anderen über ein geeignetes Ansteuern von Antriebsventilen auf der Eingangsseite sowie von Ausgangsventilen auf der Ausgangsseite erreicht.

In einer bevorzugten Ausführungsvariante werden steuerbare Ventile eingesetzt, um den Einlassvolumenstrom und/oder die Einlassdauer des ersten Gases oder Gasgemisches in die Kompressionseinheit zu regeln, wodurch sich das Ausgangsgasmischungsverhältnis sowie der Ausgangsgasdruck individuell einstellen lassen. Vorzugsweise werden die vorgesehenen Schaltventile elektrisch gesteuert, jedoch sind auch pneumatische und hydraulische oder alternativ auch eine mechanische Ansteuerung der Ventile möglich. Eine Steuereinrichtung ermittelt aus den vorgegebenen Soll-Drücken und den Volumenströmen bzw. Masseströmen die jeweiligen Schaltstellungen der Steuerventile durch die Überwachung der Drücke pOAB, pOA, pOB und der Volumen- bzw. Massenströme.

In einer bevorzugten Ausführungsform des erfindungsgemäßen Verfahrens wird ein Ziel-Gas oder ein Ziel-Gasgemisch (AB) hergestellt, welches sich auf einem definierten Druckniveau (pAB) befindet, wobei wenigstens zwei Ausgangsgase, bestehend aus dem ersten Gas oder Gasgemisch (B) und dem zweiten Gas oder Gasgemisch (A), vermengt werden. Hierbei expandiert zumindest das zweite Gas oder Gasgemisch (A) von einem höheren Druckniveau (pA) als das Druckniveau (pAB) des Zielgases oder Zielgasgemisches und das erste Gas oder Gasgemisch (B) wird von einem niedrigeren Druckniveau (pB) in der Kompressionseinheit komprimiert, wobei für die Druckverhältnisse pA>pAB>pB gilt.

In einer weiteren bevorzugten Variante ist vorgesehen, dass wenigstens ein Zielgas oder Zielgasgemisch mit nahezu konstantem Volumenstrom an einen nachgeschalteten Verbraucher abgegeben wird. Vorzugsweise ist vorgesehen, dass bedarfsweise das erste Gas oder Gasgemisch (B) und/oder das zweite Gas oder Gasgemisch (A) als verdichtetes Gasgemisch (AB) in einem variabel einstellbaren Mischungsverhältnis auf einem definierten Druckniveau (pOAB) oder die Eingangsgase getrennt auf jeweils definierten Druckniveaus (pOA, pOB) an den nachgeschalteten Verbraucher abgeben werden.

In einer weiteren bevorzugten Ausführungsvariante ist vorgesehen, dass die mechanische Kopplung der wenigstens einen Antriebseinheit und der Verdichtungseinheiten über eine oder mehrere mechanischen Wellen oder über eine hydraulische Kopplung erfolgt.

Ferner ist bevorzugt, dass die Expansion des zweiten Gases oder Gasgemisches (A) und die Verdichtung des ersten Gases oder Gasgemisches (B) doppelwirkend über Antriebskolben erfolgt, indem jeweils eine Kolbenseite die wenigstens eine Antriebseinheit und die wenigstens eine Kompressionseinheit antreibt, während auf der gegenüberliegenden Kolbenseite eine Entleerung oder Ansaugen erfolgt, wodurch eine Verdichtung in beiden Hubrichtungen möglich ist.

Vorzugsweise werden die Volumen- und Druckverhältnisse der vorliegenden Druckniveaus und Gasmengen angepasst, indem das Verdichtungsvolumen über wenigstens einen Verdichtungszylinder und ein Steuerventil verändert wird. Dabei ist vorzugsweise vorgesehen, dass die während der Druckänderungsprozesse entstehenden thermischen Energieströme auf Antriebs- und Kompressionsseite getrennt ausgekoppelt werden. Diese können wahlweise für weitere Prozessführungen genutzt oder die thermischen Energieströme bei Bedarf gegenseitig zwischen Antriebs- und Kompressionssystem ausgleichen werden, beispielsweise um einen annähernd isothermen Verdichtungsvorgang zu erreichen.

Dies wird in einer bevorzugten Anwendungsform dadurch gelöst, dass die Antriebs- und Kompressionszylinder jeweils thermisch isoliert zueinander mit jeweils einem thermischen Auskopplungssystem ausgestattet sind und die Möglichkeit haben, über jeweils mindestens einen Eingang und einen Ausgang pro System innerhalb jeweils eines geschlossenen Kreislaufs thermische Energie zu- oder abzuführen. Dadurch lassen sich neben dem Ausgleich zueinander die beim Verdichten und Expandieren entstehenden thermischen Energieströme wahlweise auch aus dem System auskoppeln und verbraucherseitig nutzen. Alternativ können extern vorhandene thermische Energieströme eingekoppelt werden, um beispielsweise eine unzulässige Erwärmung oder Auskühlung des Systems zu vermeiden. Dadurch kann die Verdichtungsleistung erhöht werden oder die Arbeitsprozesse können in thermisch optimierten Arbeitspunkten stattfinden. Vorzugsweise erfolgt eine Entkopplung der Antriebs- und Verdichtungszylinder von der Umwelt über ein thermisch isoliertes Gehäuse.

In einer bevorzugten Ausführungsform erfolgt die thermische Auskopplung, indem die Antriebszylinder und/oder Verdichtungszylinder von jeweils einem in sich geschlossenen und isolierten Fluidsystem vollständig oder teilweise umgeben sind. Über eigene Ein- und Ausgänge wird eine Zirkulation des vorzugsweise flüssigen Wärmeträgermediums ermöglicht. Hierdurch kann ein thermischer Energieaustausch über Wärmeübertragungssysteme zwischen einzelnen Zylindereinheiten oder externen Systemen erfolgen, was eine flexible Betriebsweise sowie eine für jeden Zylinder individuelle und unabhängige Abgabe oder Aufnahme von thermischer Energie von unterschiedlichen Energieträgern auf der Verdichter- oder Antriebsseite ermöglicht. So kann beispielsweise mit der bei der Expansion am Antriebszylinder absorbierten Wärmemenge ein Eingangsprozessgas abgekühlt und somit entfeuchtet werden, während gleichzeitig die Wärmeenergie aus der Verdichtung verbraucherseitig genutzt wird. Vorzugsweise sind die einzelnen Zylinder in einem eigenen Gehäuse integriert, was insbesondere für explosionsfähig technische Gase oder Prozessgase vorteilhaft ist, da ein konstanter Betriebsdruck aufrechterhalten und überwacht werden kann. Deshalb kommt in einer bevorzugten Variante zusätzlich ein Abdichtungssystem zum Einsatz und wird in Verbindung mit einer Drucküberwachung des Fluidraums als sicherheitsrelevante Leckage-Erkennung eingesetzt, die im Falle einer Undichtigkeit beispielsweise Signal- oder Sicherheitseinrichtungen aktiviert.

Die Erfindung betrifft ferner eine Vorrichtung zur Verdichtung eines Gases oder eines Gasgemisches, wobei ein erstes Gasgemisch (B) bereitgestellt wird, dessen Druckniveau niedriger ist das das Druckniveau eines zweiten Gases oder Gasgemisches (A), wobei die aus der Expansion des sich auf dem höheren Druckniveau befindenden zweiten Gases oder Gasgemisches (A) gewonnene Energie zum Verdichten des ersten Gas oder Gasgemisches (B) genutzt wird. Die Vorrichtung ist dadurch gekennzeichnet, dass zur Verdichtung des ersten Gases oder Gasgemisches (B) wenigstens eine Antriebseinheit und eine oder mehrere Kompressionseinheiten vorgesehen sind, die fluidisch miteinander gekoppelt sind und bei denen eine Übertragung der durch Expansion des zweiten Gases oder Gasgemisches (A) abgegebenen mechanischen Leistung der wenigstens einen Antriebseinheit an die Kompressionseinheit über eine mechanische Kopplung erfolgt.

Vorzugsweise umfasst die Vorrichtung ferner wenigstens einen zuschaltbaren Nachverdichter, vorzugsweise einen hydraulisch angetriebenen Kolbenverdichter, der zusätzliche Antriebsleistung in die Verdichtungseinrichtung einkoppelt, wobei die Leistungsübertragung des wenigstens einen Nachverdichters über eine mechanische oder fluidische Kopplung mit der wenigstens einen Antriebseinheit erfolgt. Vorzugsweise ist vorgesehen, dass wenigstens ein zuschaltbarer Nachverdichter wenigstens eines der ausgangsseitigen Gase (vorzugsweise das erste Gas oder Gasgemisch (B)) der Kompressionseinheit auf ein höheres Druckniveau bringt. Dabei ist in einer bevorzugten Ausführungsvariante vorgesehen, dass die Ankopplung des Eingangsstromes des Nachverdichters an den Ausgangsgasstrom der Kompressionseinheit erfolgt, der nachverdichtete Gasstrom des Nachverdichters in den Ausgangsgasstrom der Kompressionseinheit wieder eingekoppelt wird und dass Rückstrom verhindernde Ventile in dem Ausgangsgasstrom der Kompressionseinheit den Eingangsgasstrom des Nachverdichters von dem Ausgangsgasstrom des Nachverdichters trennen.

In einer bevorzugten Variante ist eine Steuerung vorgesehen, bei der die wenigstens eine Kompressionseinheit, die Einlassvolumenströme und/oder die Einlassdauer der einströmenden Gase an den Gaseingängen steuerbar sind. Hierfür regelt die Steuerung die Volumenströme und Zeiten entsprechend. Dabei soll die Steuerbarkeit der Eingangsgase der wenigstens einen Kompressionseinheit durch schaltende oder mit steuerbarem Öffnungsgrad gekennzeichnete Ventile erfolgen. Die mechanische Kopplung der Antriebseinheiten an die Kompressionseinheiten erfolgt vorzugsweise über eine oder mehrere mechanische Wellen, wobei in einer alternativen Ausführungsvariante eine mechanische Kopplung der Antriebseinheiten und der Kompressionseinheiten der Verdichtungseinrichtung hydraulisch erfolgt. Hierbei ist vorzugsweise vorgesehen, dass die Kompressionseinheiten und Antriebseinheiten voneinander räumlich getrennt sind. Vorzugsweise sind die Kompressionseinheiten mechanisch starr mit wenigstens einem ersten Hydraulikzylinder verbunden. Die Antriebseinheiten sind vorzugsweise mechanisch starr mit wenigstens einem zweiten Hydraulikzylinder verbunden. Die ersten und zweiten Hydraulikzylinder sind über wenigstens eine Hydraulikleitung miteinander gekoppelt.

In einer bevorzugten Ausführungsform der erfindungsgemäßen Vorrichtung sind die Antriebseinheiten und die Kompressionseinheiten der Verdichtungseinrichtungen ganz oder teilweise durch ein oder mehrere Gehäuse umschlossen. Dabei können die Zwischenräume zwischen den Antriebseinheiten und den Kompressionseinheiten sowie den umschließenden Gehäusen ein Fluid fassen. Vorzugsweise verfügen die Gehäuse über jeweils wenigstens einen Fluideinlass und einen Fluidauslass. Zwischen Fluideinlass und Fluidauslass steht ein Fluid durch die Zwischenräume in fluidem Kontakt mit den jeweils umschlossenen Antriebseinheiten oder Kompressionseinheiten. Ferner stellt das Fluid eine thermische Kopplung her. Vorzugsweise ist das Fluid als Teil eines zirkulierenden Fluidsystems ausgelegt, welches über ein flüssiges Wärmeträgermedium eine Einkopplung und Auskopplung thermischer Energie über Wärmeüberträger ermöglicht. In einer weiter bevorzugten Ausführungsvariante der Vorrichtung sind die einzelnen Einheiten zueinander und/oder zur Umwelt thermisch isoliert ausgeführt.

In einer alternativen Ausführungsform sind die Antriebseinheiten und/oder die Kompressionseinheiten der Verdichtungseinrichtung vollständig durch ein oder mehrere Gehäuse umschlossen und die Zwischenräume zwischen den jeweiligen Einheiten und den Gehäusen werden über geeignete Sensoren sensorisch überwacht. Dadurch ist eine Leckageerkennung gegen Gasaustritt aus den Antriebseinheiten und Kompressionseinheiten möglich.

Vorzugsweise sind die erfindungsgemäßen Antriebseinheiten und Kompressionseinheiten der Verdichtungseinrichtung in Reihe zueinander angeordnet. Alternativ ist eine parallele Anordnung möglich.

Vorzugsweise umfasst die Vorrichtung kolbenförmige Strukturen, um die mechanische Leistung in der oder den Antriebseinheiten durch Umwandlung von Gasdruck in Kräfte und lineare Bewegungen zu erzeugen. Die Zuführung und Abführung der Gase erfolgt jeweils vor bzw. hinter den kolbenförmigen Strukturen.

In einer bevorzugten Ausführungsvariante der erfindungsgemäßen Vorrichtung sind Ventile vorgesehen, die einen Rückstrom des Ausgangsgasstromes der Kompressionseinheit verhindern, indem sie den Eingangsgasstrom des Nachverdichters von dem Ausgangsgasstrom des Nachverdichters trennen. In einer weiter bevorzugten Ausführungsvariante besteht die Antriebseinheit aus einem Antriebszylinder mit Antriebskolben und die Kompressionseinheit aus einem Kompressionszylinder, wobei ferner ein Ventil vorgesehen ist, um das zweite Gas oder Gasgemisch mit höherem Druckniveau (pOA) als das erste Gas oder Gasgemisch (pOB) abwechselnd auf die beiden Kolbenseiten des Antriebskolbens zu beaufschlagen.

Um die bei der Verdichtung und Expansion auftretenden thermischen Energieströme zu nutzen, kommt vorzugsweise das thermische Auskopplungsverfahren zum Einsatz. Hierbei werden alle Zylinder mit einem thermisch zueinander und zur Umwelt isolierten, in sich geschlossenen, dichten, vorzugsweise unter Überdruck stehenden Fluidsystem umgeben, welches mindestens einen Ein- und einen Ausgang zum Aufbau eines Kreislaufs aufweist. Innerhalb des Kreislaufs erfolgt der Aufbau der erforderlichen Zirkulation zur Auskopplung der thermischen Energieströme über Pumpen oder andere Fluidförderer. Zur Nutzbarmachung der Wärmeströme ist vorzugsweise die Integration von Wärmeüberträgersystemen in den Fluidkreislauf vorgesehen, beispielsweise über Rohrbündel- oder Plattenwärmetauscher.

Die Erfindung eignet sich insbesondere für das Power-to-Gas Konzept, bei dem die potentielle Energie der Elektrolysegase Wasserstoff und Sauerstoff für die Methanisierung von Wasserstoff genutzt wird. Dazu wird das Druckniveau des Wasserstoffs durch Expansion abgesenkt und das Druckniveau des Methangases durch Verdichtung angehoben. Dies geschieht über die beschriebenen Antriebs- und Verdichtungseinheiten. Auf diese Weise wird der Überschussdruck des Wasserstoffs dem Methangas zugeführt.

Die Erfindung wird in den nachfolgenden Zeichnungen näher erläutert. Es zeigt
- Fig. 1: eine schematische Ansicht der gesamten Verdichtungseinrichtung,
- Fig. 2: einen schematischen Aufbau des Gasausgangs und die Energieübertragung an einen nachgeschalteten Verbraucher,
- Fig. 3: das Gesamtschema der während der Druckänderungsprozesse entstehenden thermischen Energieströme,
- Fig. 4: die Entkopplung thermischer Energie über ein angeschlossenes Fluidsystem,
- Fig. 5: den Einsatz einer Drucküberwachung eines Fluidraumes zur Leckageerkennung von Gas aus den Antriebs- oder Kompressionskammern,
- Fig. 6: einen hydraulisch angetriebenen Nachverdichter mit direkter Kopplung der Kolbenwelle von Nachverdichter und Antriebszylinder,
- Fig. 7: einen hydraulisch angetriebenen Nachverdichter mit Nachverdichtung des aus dem Kompressionszylinder austretenden Gases,
- Fig. 8: ein Anwendungsbeispiel des erfindungsgemäßen Verfahrens und der Vorrichtung.

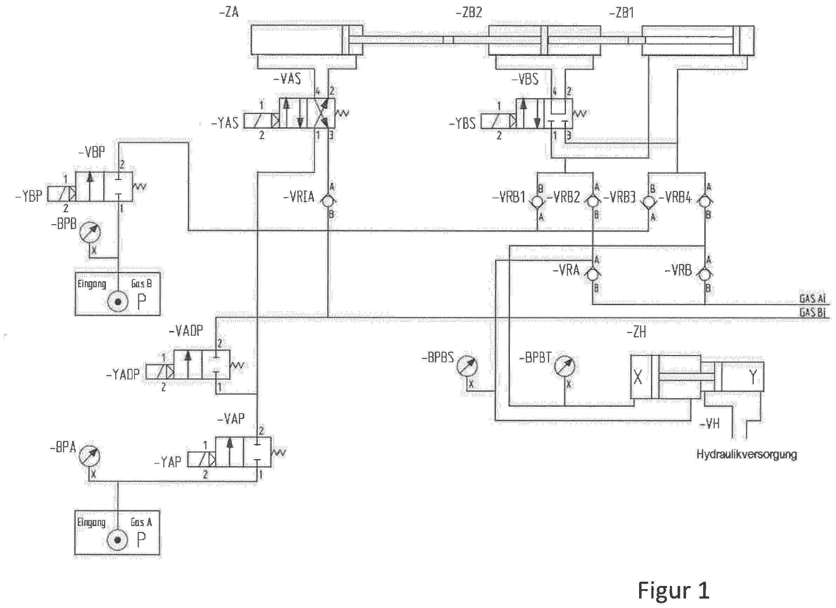

In Fig. 1 ist eine schematische Ansicht eines Verfahrensablaufs gezeigt. Ausgangspunkt ist ein erstes Gas oder Gasgemisch (B) und ein weiteres zweites Gas oder Gasgemisch (A), wobei das erste Gas oder Gasgemisch (B) ein niedrigeres Druckniveau aufweist. Dabei soll die in dem ersten Gas oder Gasgemisch (B) gespeicherte potentielle Energie durch Verdichtung angehoben werden, indem das Druckniveau des zweiten Gases oder Gasgemisches (A) durch dessen Expansion für die Kompression genutzt wird. Dies ist möglich, weil das zweite Gas oder Gasgemisch (A) einen höheren Druck aufweist als der Druck des ersten Gases oder Gasgemisches (B). Erfindungsgemäß sind mindestens eine Antriebseinheit und mindestens eine Kompressionseinheit vorgesehen. Das zweite Gas oder Gasgemisch (A) gibt durch Expansion mechanische Leistung an die wenigstens eine Antriebseinheit der Verdichtungseinrichtung ab. Dabei wird eine mechanische Leistung in der oder den Antriebseinheiten durch Umwandlung von Gasdruck über vorzugsweise kolbenförmige Strukturen in Kräfte und lineare Bewegungen erzeugt. Durch Kompression wird das erste Gas oder Gasgemisch (B) in der wenigstens einen Kompressionseinheit der Verdichtungseinrichtung durch eine mechanische Leistungsaufnahme auf einen höheren Druck gebracht. Die mechanische Leistung in der oder den Kompressionseinheiten wird durch Umwandlung von Kräften und linearen Bewegungen über die kolbenförmigen Strukturen in einen erhöhten Gasdruck umgewandelt. Dabei erfolgt die Leistungsübertragung der Antriebseinheiten zu den Kompressionseinheiten über eine mechanische Kopplung. Bei den Gasen oder Gasgemischen handelt es sich um Prozessgase, technische Gase oder Druckluft.

In dem Schema der Figur 1 ist gezeigt, dass das zweite Gas oder Gasgemisch (A) mindestens einen Antriebszylinder (ZA) antreibt, der über eine mechanische oder eine fluidische Kopplung in einem oder mehreren Kompressionszylindern (ZB1, ZB2) das erste Gas oder Gasgemisch (B) verdichtet. Falls die beim Expandieren des zweiten Gases oder Gasgemisches (A) freiwerdende mechanische Leistung für eine ausreichend hohe Verdichtung des ersten Gases oder Gasgemisches (B) nicht ausreicht, wird das erste Gas oder Gasgemisch (B) über eine Nachverdichtung auf den vorgesehenen Ausgangsdruck gebracht. Die Nachverdichtung ist vorzugsweise hydraulisch ausgeführt. Auf diese Weise wird das zweite Gas oder Gasgemisch im Mittel immer gerade so viel Leistung entnommen, dass der Ausgangsdruck (pOA, pOAB) des zweiten Gases oder Gasgemisches (A) bei dem vorgesehenen Ausgangsvolumenstrom (QA) gerade aufrecht erhalten werden kann. Dadurch wird die im Antriebsgas (Gas oder Gasgemisch (A)) über Druck gespeicherte potentielle Energie optimal ausgenutzt. Über entsprechend angeordnete umgeschaltete Ventile auf der Antriebsseite (YAP, YAS) werden das zweite Gas oder Gasgemisch (A) und über entsprechend angeordnete geschaltete Ventile auf der Kompressionsseite (YBP, YBS) das erste Gas oder Gasgemisch (B) derart gesteuert, dass in beide Hubrichtungen Verdichtungen erfolgen und über zu- und abschaltbare zusätzliche Kompressionszylinder die Volumenströme der Ausgangsgase Gas (A), Gas (B) oder Gas (AB) entsprechend den gewünschten Mischungsverhältnissen bereitgestellt werden. Rückströmungen werden vorzugsweise durch Rückschlagventile (VREA, VRB1-VRB4, VRA, VRB, VROA und VROB) verhindert.

Da sich je nach vorliegenden Drücken und Gasmengen alleine über die steuernden Ventile nicht beliebige Volumen- und Druckverhältnisse einstellen lassen, kann das Kompressionsvolumen bedarfsweise über einen oder mehrere zusätzlichen Kompressionszylinder (ZB2) und ein Steuerventil (YBS) zuschaltbar vergrößert werden. Die Erhöhung der Antriebsleistung des expandieren Eingangsgases (Gas oder Gasgemisch (A)) erfolgt über die Zuschaltung wenigstens eines Nachverdichters (ZH).

Je nach Bedarf können zwei oder mehrere Ausgangsgase (Gas A und Gas B) als verdichtetes Gasgemisch (Gas AB) in einem variabel einstellbaren Mischungsverhältnis auf einem definierten Druckniveau pOAB oder die Eingangsgase getrennt auf jeweils definierten Druckniveaus pOA und pOB an die nachgeschalteten Verbraucher abgegeben werden. Dies wird in vorteilhafter Weise zum einen über die Zuschaltung (YPS) weiteren Verdichtungsvolumens über mindestens einen zusätzlichen Verdichtungszylinder (ZB2) und zum anderen über geeignetes Ansteuern der Antriebsventile (VAP, VBP, VAS) und des Druckschaltventils für das Gas oder Gasgemisch (A) (VABP) auf der Eingangsseite sowie die Ausgangsventile (VOA, VOB und VOAB) auf der Ausgangsseite erreicht.

Um kontinuierliche Ausgangsdrücke und Volumenströme (pAOA, pOB, pOAB, QA, QB) bei variierenden Volumina und Drücken auf der Seite der Ursprungsgase oder Ursprungsgasgemische (Gas A, Gas B) zu gewährleisten, ist die optionale Zuschaltung wenigstens eines Nachverdichters (ZH) vorgesehen. Bevorzugt ist ein hydraulisch angetriebener Kolbenverdichter, der wenigstens ein Gas oder Gasgemisch (Gas B) bei unzureichend zur Verfügung stehender fluidisch gespeicherter Energie aus Gas A auf den gewünschten Ausgangsdruck (pAB, pBS, pBT) verdichtet, wobei pA > pAB ≥ pB gilt. Dies hat unter anderem den Vorteil, dass selbst im Falle einer notwendigen Nachverdichtung der Einsatz elektrischer Energie minimiert wird, da immer der maximal mögliche Druckabfall der Antriebsgase genutzt wird, nämlich der Differenzdruck zwischen dem Eingangsdruck pA und dem jeweiligen Ausgangsdruck pOA, pOAB. Der Nachverdichter wird in einer bevorzugten Anwendung ebenfalls in die Nutzung und Steuerung der thermischen Energieströme eingebunden.

Bei einem ausreichend dimensionierten Hydrauliknetz sowie der eingangsseitig beschriebenen Druckverhältnisse kann somit vorteilhaft ein Verdichter zum Einsatz kommen, der dann auch thermische Energie zur Verfügung stellt, ohne elektrische Antriebsenergie auskommt und elektrische Energie nur noch in sehr geringem Umfang für Steuer-, Mess-, und Regelaufgaben benötigt, was neben der Reduktion der Betriebskosten zusätzlich eine wesentlich kostengünstigere Installation im Vergleich zu herkömmlich elektrisch angetriebenen Verdichtersystemen zur Folge hat.

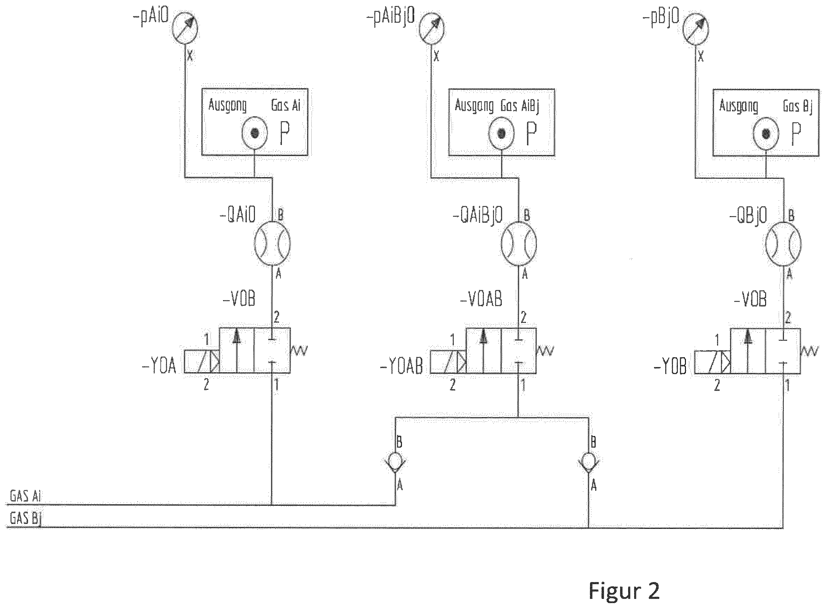

In Fig. 2 ist der Aufbau eines Gasausganges mit Ventilen sowie die Übergabe an nachgeschaltete Verbraucher gezeigt. Die Rückschlagventile können auch durch steuerbare Ventile ersetzt werden, um den Einlassvolumenstrom und/oder die Einlassdauer des ersten Gases oder Gasgemisches (B) in die Kompressionseinheit zu regeln, wodurch sich das Ausgangsgasmischungsverhältnis sowie der Ausgangsgasdruck individuell einstellen lassen. Bevorzugt sind die Schaltventile elektrisch gesteuert, jedoch sind auch pneumatische und hydraulische oder mechanische Ansteuerungen der Ventile möglich. Eine Steuereinrichtung ermittelt aus den vorgegebenen Soll-Drücken und Soll-Volumen- oder Masseströmen die jeweiligen Schaltstellungen der Steuerventile durch die Überwachung der Drücke (pOAB, pOA, pOB) und der Volumen- bzw. Massenströme (BQA und BQB). Für die Eingangsgasdrücke gilt hierbei pA > pAB > pB sowie pA ≥ pOA, pB ≤ pOB.

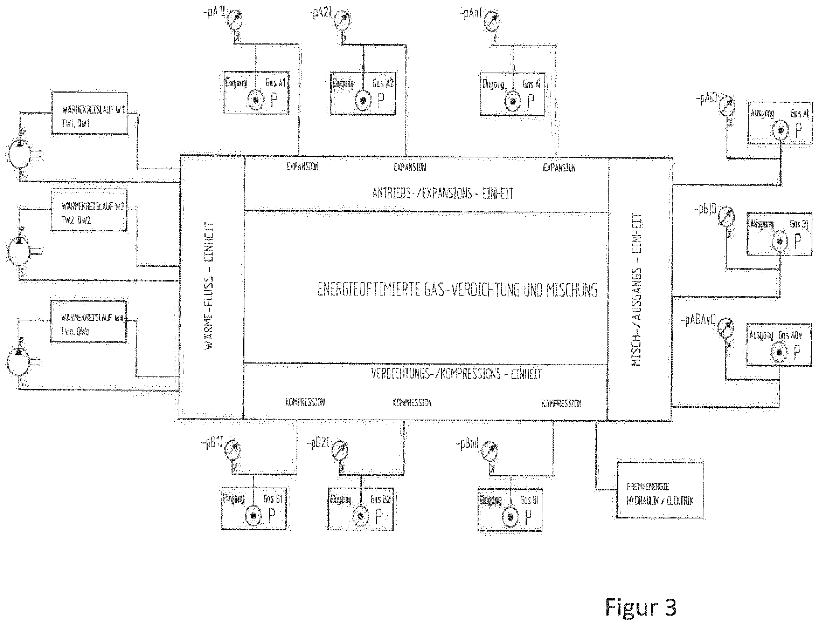

In Fig. 3 ist eine Ausführungsvariante gezeigt, bei der die während der Druckänderungsprozesse entstehenden Energieströme sowohl auf Antriebsseite als auch auf Kompressionsseite getrennt ausgekoppelt werden, um diese für einen Verbraucher nutzbar zu machen. Alternativ können bei dieser Variante bei Bedarf die thermischen Energieströme gegenseitig zwischen Antriebs- und Verdichtungssystem ausgeglichen werden, beispielsweise um einen annähernd isothermen Verdichtungsvorgang zu erreichen. Dabei sind die Antriebs- und Verdichtungszylinder vorzugsweise jeweils thermisch isoliert und mit einem thermischen Auskopplungssystem ausgestattet. Über systemeigene Ein- und Ausgänge kann innerhalb jeweils eines geschlossenen Kreislaufs thermische Energie zu- und abgeführt werden. Gezeigt sind daher ein Raum für eine energieoptimierte Gasverdichtung und Gasmischung, eine Misch-/Ausgangseinheit sowie eine Wärme-/Flusseinheit. Die einzelnen Ausgänge sind unabhängig voneinander regelbar. Thermische Energie kann ausgekoppelt werden, um beispielsweise einem oder mehreren Wärmekreisläufen (W1, W2, W3) zugeführt zu werden. Ferner sind noch Zugänge für Fremdenergie, Hydraulik/Elektronik vorgesehen.

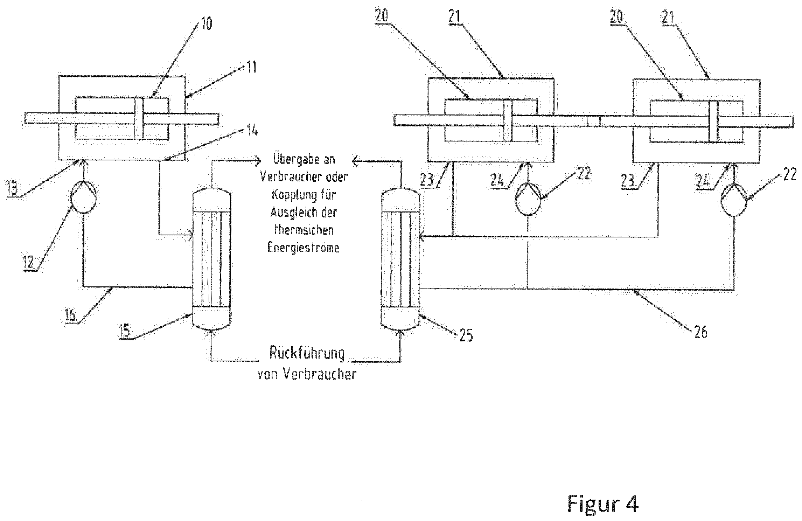

In Fig. 4 findet eine Entkopplung thermischer Energie über ein geschlossenes Fluidsystem statt. Die Antriebs- und Verdichtungszylinder sind von jeweils einem in sich geschlossenen und isolierten Fluidsystem (11, 21) vollständig oder teilweise umgeben. Über mindestens einen Ein- und Ausgang (13, 14, 23, 24) pro System wird innerhalb eines geschlossenen Fluidkreislaufs (16, 26) eine Zirkulation des vorzugsweise flüssigen Wärmeträgermediums ermöglicht. Ein thermischer Energieaustausch erfolgt über Wärmeüberträgersysteme (15, 25) zwischen einzelnen Zylindereinheiten oder externen Systemen, was eine hoch flexible Betriebsweise sowie eine für jeden Zylinder individuelle und unabhängige Abgabe oder Aufnahme von thermischer Energie von unterschiedlichen Energieträgern auf der Kompressions- oder Antriebsseite ermöglicht. Über die Wärmeüberträgersysteme (15, 25) erfolgt eine Rückführung von den Verbrauchern. Mit der bei der Expansion am Antriebszylinder absorbierten Wärmemenge kann beispielsweise ein Eingangsprozessgas gekühlt und entfeuchtet werden, wenn gleichzeitig die Wärmeenergie aus der Verdichtung verbraucherseitig genutzt wird.

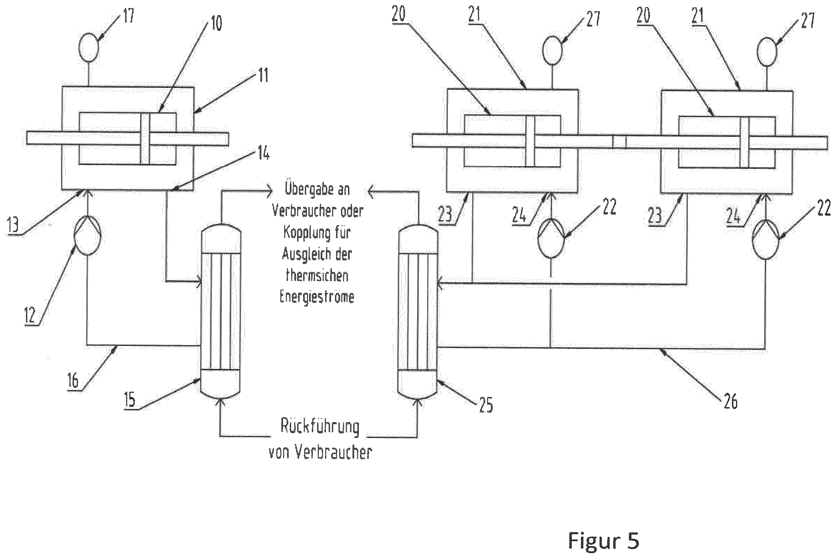

In Fig. 5 wird der Einsatz einer Drucküberwachung des Fluidraumes zur Leckageerkennung von Gas aus den Antriebs- oder Verdichtungskammern gezeigt. Bei einem Einsatz als Verdichter für explosionsfähige technische Gase oder Prozessgase sowie beim Einsatz an Anlagen, die der TA-Luft unterliegen, wird vorzugsweise das zum jeweiligen Zylinder zugehörige, mit einem Fluid gefüllte thermische Auskopplungssystem als vollständig den Zylinder umschließende Einheit ausgelegt (11, 21), die unter konstantem Betriebsdruck gehalten und sensorisch überwacht wird (zum Beispiel auf Druck - 17, 27). Somit kommt das Auskopplungssystem, neben der Energieübertragung, noch zusätzlich als Abdichtungssystem zum Einsatz und wird in Verbindung mit einer sensorischen Überwachung des Fluidraumes (17, 27) als vorzugsweise sicherheitsgerichtete Leckageerkennung eingesetzt, die im Falle einer Undichtigkeit zugelassene Sicherheitseinrichtungen aktiviert.

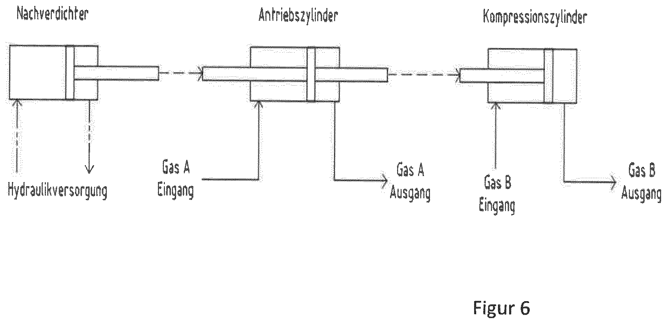

In Fig. 6 ist das Prinzip eines hydraulisch angetriebenen Nachverdichters gezeigt. Bei der gezeigten Ausführungsvariante erfolgt eine direkte Kopplung der Kolbenwelle von Nachverdichter und Antriebszylinder. Die Zuschaltung eines hydraulisch angetriebenen Nachverdichters ist vorteilhaft, sollte die beim Expandieren eines Gases frei werdende Energie nicht ausreichen, um das andere Gas auf den gewünschten Ausgangsdruck bzw. die Ausgangsmenge zu verdichten. Erfindungsgemäß wird die Nachverdichtungsleistung entweder direkt über eine mechanische oder fluidische Kopplung mit der Zylinderwelle des Antriebszylinders eingekoppelt.

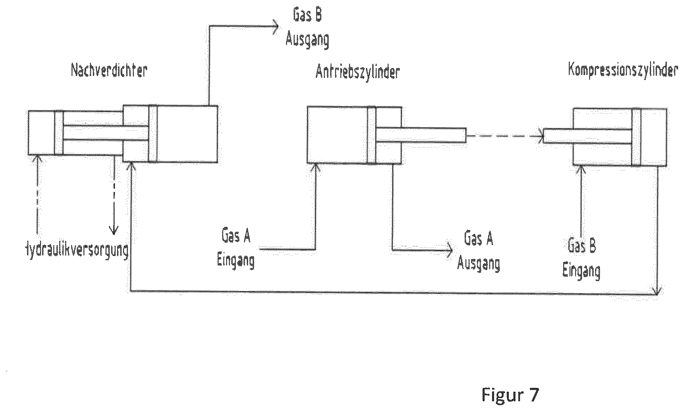

In der Fig. 7 ist eine alternative Kopplung gezeigt. Hier erfolgt das Nachverdichten des aus dem Kompressionszylinder austretenden Gases oder Gasgemisches mit niedrigerem Druckniveau (Gas B). Um eine möglichst effiziente Nutzung der zur Verfügung stehenden potentiellen Energie in dem auf höherem Druck vorliegenden zweiten Gas oder Gasgemisch (Gas A) zu gewährleisten, wird die Verdichtungsanlage vorzugsweise doppelwirkend konzipiert, d.h. es erfolgt in beide Hubrichtungen eine Verdichtung. In der gezeigten Variante erfolgt dies über ein Vier-Zwei-Wegeventil auf der Antriebsseite (YAS; vgl. Fig. 1). Das zweite Gas oder Gasgemisch (Gas A) wird abwechselnd auf beiden Kolbenseiten eingegeben. Somit wird abwechselnd jeweils auf einer Kolbenseite von Antriebs- und Verdichtungszylinder angetrieben bzw. verdichtet, während gleichzeitig auf der anderen Kolbenseite entleert, expandiert oder angesaugt wird. Zur Verhinderung von Rückströmungen werden vorzugsweise Rückschlagventile und/oder Gasrücktrittssicherungen verwendet.

Alternativ ist es möglich, die Rückschlagventile auf der Kompressionsseite durch ansteuerbare Regelventile zu ersetzen, um die einströmenden und abströmenden Gasmengen ein- und ausgangsseitig variieren zu können. Solche Regelventile, wie auch alle anderen zum Einsatz kommenden Schalt- und Steuerventile, können so elektrisch, pneumatisch, mechanisch oder hydraulisch angetrieben oder mit kombinierten Antriebssystemen eingesetzt werden.

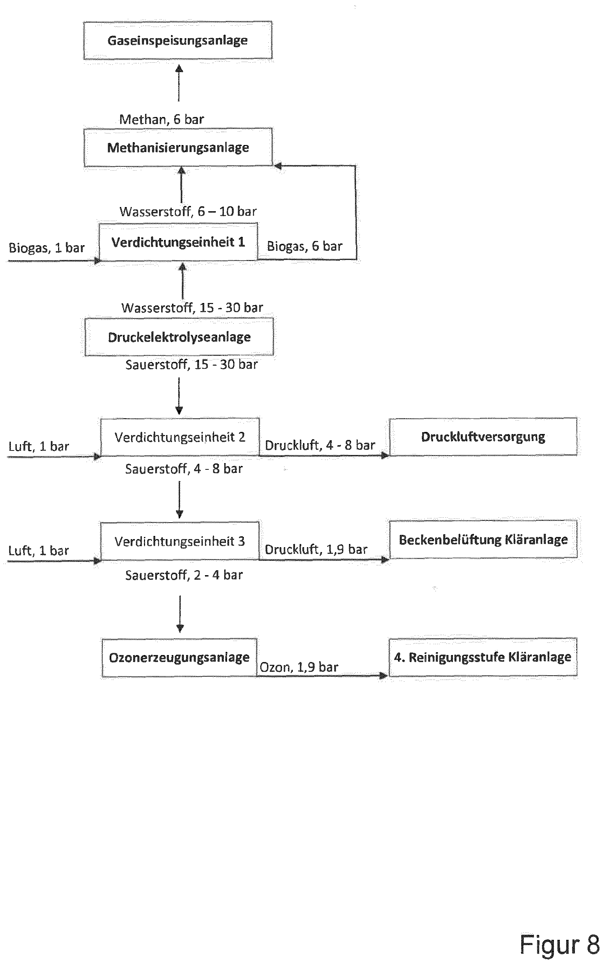

In Fig. 8 ist ein Anwendungsbeispiel des erfindungsgemäßen Verfahrens gezeigt. Zentraler Bestandteil der Vorrichtung ist eine Druckelektrolyseanlage, bei der eine Spaltung von Wasser zu Wasserstoff und Sauerstoff erfolgt. Die beiden Elektrolysegase stehen unter einem sehr hohen Druck, vorzugsweise in einem Bereich zwischen 15 und 60 bar. Der in der Elektrolyse gewonnene Wasserstoff wird zusammen mit dem Biogas einer Verdichtungseinheit 1 zugeführt. Das Biogas entspricht erfindungsgemäß einem Gas mit niedrigem Druckniveau (hier 1 bar abs.), während der Wasserstoff einem Gas mit hohem Druckniveau (hier 15 bis 60 bar) entspricht. Erfindungsgemäß werden die unterschiedlichen Druckniveaus nun ausgeglichen, indem das Biogas von einem niedrigen Druckniveau auf ein höheres Druckniveau (vorzugsweise 6 bar) überführt, während das Druckniveau des Wasserstoffs auf einen Druck von beispielsweise 6 bar abgesenkt wird. Das behandelte Biogas der Verdichtungseinheit 1 wird anschließend einer Methanisierungsanlage zugeführt. Das Druckniveau des in die Verdichtungseinheit 1 zugeführten Wasserstoffs wird im Rahmen der Druckanpassung von 15 bis 60 bar auf vorzugsweise 6 bis 10 bar abgesenkt. Der aus der Verdichtungseinheit 1 stammende Wasserstoff wird ebenfalls der Methanisierungsanlage zugeführt. Aus dieser geht dann Methangas mit einem Druck von vorzugsweise 6 bar hervor, welches letztendlich einer Gaseinspeisungsanlage zugeführt wird und somit dem Erdgasnetz zu Gute kommt. Als Biogas können sämtliche CO₂-haltigen Gase verwendet werden, beispielsweise Klärgase, Brauereigase oder Gase aus einer anaeroben Fermentation, beispielsweise einer alkoholischen Gärung.

Der in der Druckelektrolyseanlage unter hohem Druck gewonnene Sauerstoff (hier beispielhaft 15 bis 60 bar) wird im weiteren Verlauf zusammen mit Außenluft auf einem Druckniveau von 1 bar abs. einer Verdichtungseinheit 2 zugeführt, wodurch Druckluft mit einem Druckniveau zwischen 4 und 8 bar entsteht. Diese kann zur Druckluftversorgung verwendet werden, beispielsweise für Prozessanwendungen, Ventilsteuerungen oder Reinigungen. Aus der Verdichtungseinheit 2 geht der Sauerstoff mit einem niedrigen Druckniveau von vorzugsweise 4 bis 8 bar hervor und wird einer weiteren Verdichtungseinheit 3 zugeführt. Auch hier erfolgt eine Druckanpassung durch Zufuhr von Luft mit einem niedrigen Druckniveau (z.B. 1 bar), so dass aus der Verdichtungseinheit 3 schließlich Druckluft mit einem Druck von 1,9 bar hervorgeht, welche vorzugsweise zur Beckenbelüftung einer Kläranlage genutzt wird. Dadurch lassen sich bei der Kläranlage erhebliche Energiekosten einsparen, da 30 % der Energieleistung einer Kläranlage für die Belüftung aufgewendet werden. Der aus der Verdichtungseinheit 3 hervorgehende Sauerstoff wird mit einem Druck zwischen 2 und 4 bar einer Ozonerzeugungsanlage zugeführt. In dieser erfolgt die Erzeugung von Ozongas mit einem niedrigeren Druckniveau von 1,9 bar, welches beispielsweise zur Keimtötung (Hygenisierung von Abwasser) verwendet werden kann. Dieser Schritt stellt gewöhnlich die vierte Reinigungsstufe einer Kläranlage dar.

### Beispiele:

Die verschiedenen Anwendungen der erfindungsgemäßen Vorrichtung bzw. des erfindungsgemäßen Verfahrens werden in den nachfolgenden Beispielen gezeigt. Keinesfalls soll die Erfindung jedoch auf diese Beispiele beschränkt werden. Es ist ferner vom Erfindungsgedanken angedacht, dass sämtliche hier beschriebenen Merkmale und Ausführungsvarianten miteinander zu neuen, hier nicht beschriebenen Varianten kombiniert werden können. Somit sind auch Merkmalskombinationen unterschiedlich beschriebener Ausführungsvarianten vom Erfindungsgedanken abgedeckt.

### Beispiel 1

Eine bevorzugte Anwendungsform des erfindungsgemäßen Verfahrens bzw. der Vorrichtung besteht bei der Druckelektrolyse, bei der die Druckdifferenzen der einzelnen Gase in energieoptimierter Weise genutzt werden. So kann die potentielle Energie der Elektrolysegase (Wasserstoff, Sauerstoff) für sich anschließende nachfolgende Prozesse genutzt werden, beispielsweise für die Methanisierung von Wasserstoff und die Bereitstellung von Druckluft für die Sauerstoffbegasung bei aeroben Abwasserreinigungsprozessen. Bei der Druckelektrolyse wird Wasser zu Wasserstoff und Sauerstoff gespalten. Die dabei entstehenden Gase (Wasserstoff und Sauerstoff) werden für die nachfolgenden Prozesse weiter genutzt. Der Wasserstoff wird der Methanisierung zugeführt, bei der unter Zusatz von Kohlenstoffdioxid (z.B. enthalten in Biogas) Methan sowie Wasser entstehen. Bei einer solchen Reaktion werden etwa 20 % exotherme Energie in Form von Wärme frei. Die frei werdende thermische Energie kann beispielsweise für eine Klärschlammtrocknung genutzt werden. Der Reaktionswasserstoff weist bei einer Druckelektrolyse einen Druck zwischen 15 und 60 bar auf. Biogas wiederum liegt beim atmosphärischen Druck von etwa 1 bar vor und muss somit auf ein Druckniveau von 5 bis 6 bar angehoben werden, damit die Methanisierung möglichst effizient verläuft. Dies wird mit dem erfindungsgemäßen Verfahren bzw. der Vorrichtung ermöglicht. Erfindungsgemäß wird das Druckniveau des Wasserstoffs (zweites Gas (A)) durch Expansion abgesenkt und das Druckniveau von Biogas (erstes Gas (B)) durch Verdichtung angehoben. Hierzu werden die Gase, wie zuvor beschrieben, den entsprechenden Antriebseinheiten und Verdichtungseinrichtungen zugeführt, wobei eine mechanisch starre Kopplung bei der Leistungsübertragung erfolgt. Letztendlich wird der Überschussdruck von Wasserstoff dem Biogas zugeführt (Fig 8).

Der bei der Elektrolyse entstehende Sauerstoff wiederum kann zur Sauerstoffbegasung eingesetzt werden, beispielsweise für die Begasung von Abwasserreinigungsprozessen bei Kläranlagen, um die dort eingesetzte Luft mit reinem Sauerstoff anzureichern. Die biologischen Prozesse laufen dadurch weit effizienter ab, als dies mit einem reinen Luftgemisch der Fall wäre. Alternativ oder zusätzlich kann der durch die Elektrolyse gewonnene Sauerstoff auch direkt mittels Ozonung zu Ozon umgewandelt werden (Fig 8). Die beim Entspannen von Wasserstoff freiwerdende Wärme kann für andere Prozessschritte genutzt werden. Das Gleiche gilt auch für andere Gase, welche sich bei einer Entspannung abkühlen. Diese Kälte kann für Abkühlungsschritte im Prozess verwendet werden.

Der bei der Druckelektrolyse entstehende Elektrolyse-Sauerstoff kann mit dem erfindungsgemäßen Verfahren und der Vorrichtung (wie auch die Außenluft) auf den benötigen Begasungsdruck komprimiert werden und gleichzeitig kann, je nach Bedarf, zusätzlicher Sauerstoff für die Abwasserreinigung hinzugemengt werden. Der für die Ozonherstellung verwendete Sauerstoffüberschuss trägt zu einer positiven Energiebilanz bei, denn die Ozonausbeute ist im Vergleich zu einer Luft-Ozonherstellung um etwa 50 % gesteigert. Somit eignet sich dieser Prozess insbesondere für die vierte Reinigungsstufe in einer Kläranlage, bei der ein Abbau von Arzneimitteln, Antibiotika und hormonwirksamen Substanzen durch eine Ozonisierung erfolgt.

### Beispiel 2:

Ein weiterer Einsatzbereich des erfindungsgemäßen Verfahrens und der Vorrichtung besteht im Bereich der Druckminderung. Gase, die beispielsweise Instituten, Laboratorien oder industriellen Unternehmen zur Verfügung gestellt werden, werden unter hohem Druck geliefert, um das Gas auf kleinem Raum zu verdichten. Die Drücke in den Gasflaschen oder stationären Tankanlagen betragen bis zu 300 bar. Bislang werden Druckminderer eingesetzt, um unter Druck stehendes Gas aus Gasflaschen zu entnehmen und auf den Arbeitsdruck zu bringen, der in der Regel etwa 5-10 bar beträgt. Mit dem erfindungsgemäßen Verfahren und der Vorrichtung können die so entstehenden Druckdifferenzen der Gase von ihrem Speicherdruck auf ihren Arbeitsdruck angepasst und die freiwerdende Energie (z.B. thermische Energie) beispielsweise für nachfolgende Prozesse genutzt und / oder zur Erzeugung von Druckluft in den jeweiligen Unternehmen genutzt werden.

## Patentansprüche

1. Verfahren zur Anpassung der Druckniveaus zweier Gase oder Gasgemische mittels Druckelektrolyse für eine Methanisierung von Biogasen oder CO₂-haltigen Gasen und/oder zur Bereitstellung von Druckluft, zur Sauerstoffbegasung und/oder Ozonerzeugung, bei dem ein erstes Gas oder Gasgemisch (B) bereitgestellt wird, dessen Druckniveau niedriger ist als das Druckniveau eines zweiten Gases oder Gasgemisches (A), wobei die aus der Expansion des sich auf dem höheren Druckniveau befindenden zweiten Gases oder Gasgemisches (A) gewonnene Energie zum Verdichten des ersten Gases oder Gasgemisches (B) genutzt wird, um die unterschiedlichen Druckniveaus auszugleichen, wobei die Verdichtung über wenigstens eine Antriebseinheit erfolgt, die von dem zweiten Gas oder Gasgemisch (A) angetrieben und das erste Gas oder Gasgemisch (B) in einer oder mehreren Kompressionseinheiten verdichtet wird, indem die Übertragung der mechanischen Leistung durch Kopplung der wenigstens einen Antriebseinheit an die wenigstens eine Kompressionseinheit erfolgt, wobei
(i) es sich bei dem ersten Gas oder Gasgemisch (B) um Biogas oder ein CO₂-haltiges Gas und dem zweiten Gas oder Gasgemisch (A) um Wasserstoff für die Methanisierung handelt, und/oder
(ii) es sich bei dem ersten Gas oder Gasgemisch (B) um Sauerstoff und dem zweiten Gas oder Gasgemisch (A) um Luft für die Gewinnung von Druckluft, zur Sauerstoffbegasung und/oder zur Ozonerzeugung handelt.

2. Verfahren nach Anspruch 1, **dadurch gekennzeichnet, dass** das erste Gas oder Gasgemisch (B) über eine Nachverdichtung auf einen vorgesehenen Ausgangsdruck gebracht wird, wenn die beim Expandieren des zweiten Gases oder Gasgemisches (A) frei werdende mechanische Leistung für die vorgesehene Verdichtung des ersten Gases oder Gasgemisches (B) nicht ausreicht.

3. Verfahren nach einem der vorhergehenden Ansprüche, **dadurch gekennzeichnet, dass** wenigstens ein Zielgas oder ein Zielgasgemisch (AB) hergestellt wird, welches sich auf einem definierten Druckniveau (pAB) befindet, wobei wenigstens zwei Ausgangsgase, bestehend aus dem ersten Gas oder Gasgemisch (B) und dem zweiten Gas oder Gasgemisch (A), vermengt werden, wobei zumindest das zweite Gas oder Gasgemisch (A) von einem höheren Druckniveau (pA) expandiert als das Druckniveau (pAB) des Zielgases oder Zielgasgemisches und das erste Gas oder Gasgemisch (B) in der Verdichtungseinrichtung von einem niedrigeren Druckniveau (pB) durch das zweite Gas oder Gasgemisch (A) mit dem höheren Druckniveau (pA) komprimiert wird, wobei für die Druckverhältnisse pA>pAB>pB gilt.

4. Verfahren nach einem der vorhergehenden Ansprüche, **dadurch gekennzeichnet, dass** wenigstens ein Zielgas oder Zielgasgemisch mit nahezu konstantem Volumenstrom an einen nachgeschalteten Verbraucher abgegeben wird.

5. Verfahren nach einem der vorhergehenden Ansprüche, **dadurch gekennzeichnet, dass** bedarfsweise das erste Gas oder Gasgemisch (B) und/oder das zweite Gas oder Gasgemisch (A) als verdichtetes Gasgemisch (AB) in einem variabel einstellbaren Mischungsverhältnis auf einem definierten Druckniveau (pOAB) oder die Eingangsgase getrennt auf jeweils definierten Druckniveaus (pOA, pOB) an den nachgeschalteten Verbraucher abgegeben wird.

6. Verfahren nach einem der vorhergehenden Ansprüche, **dadurch gekennzeichnet, dass** die mechanische Kopplung der wenigstens einen Antriebseinheit und der Kompressionseinheiten über eine oder mehrere mechanische Wellen oder über eine hydraulische Kopplung erfolgt.

7. Verfahren nach einem der vorhergehenden Ansprüche, **dadurch gekennzeichnet, dass** die Expansion des zweiten Gases oder Gasgemisches (A) und die Verdichtung des ersten Gases oder Gasgemisches (B) doppelwirkend über Antriebskolben erfolgen, indem jeweils eine Kolbenseite die wenigstens eine Antriebseinheit und die wenigstens eine Kompressionseinheit antreibt, während auf der gegenüberliegenden Kolbenseite eine Entleerung oder ein Ansaugen erfolgt, wodurch eine Verdichtung in beiden Hubrichtungen erfolgt.

8. Verfahren nach einem der vorhergehenden Ansprüche, **dadurch gekennzeichnet, dass** die Volumen- und Druckverhältnisse der vorliegenden Druckniveaus und Gasmengen angepasst werden, indem das Verdichtungsvolumen über wenigstens einen Verdichtungszylinder und/oder wenigstens ein Steuerventil angepasst werden.

9. Verfahren nach einem der vorhergehenden Ansprüche, **dadurch gekennzeichnet, dass** die während der Druckänderungsprozesse entstehenden thermischen Energieströme auf Antriebs- und Kompressionsseite getrennt ausgekoppelt werden.

10. Vorrichtung, umfassend eine Druckelektrolyseanlage, wenigstens eine Antriebseinheit und wenigstens eine Kompressionseinheit, zur Anpassung der Druckniveaus zweier Gase oder Gasgemische mittels Druckelektrolyse für die Methanisierung von Biogasen oder CO₂-haltigen Gasen und/oder zur Bereitstellung von Druckluft, zur Sauerstoffbegasung und/oder Ozonerzeugung, durch Bereitstellung eines ersten Gases oder Gasgemisches (B), dessen Druckniveau niedriger ist als das Druckniveau eines zweiten Gases oder Gasgemisches (A), wobei die aus der Expansion des sich auf dem höheren Druckniveau befindenden zweiten Gases oder Gasgemisches (A) gewonnene Energie zum Verdichten des ersten Gases oder Gasgemisches (B) genutzt wird, wobei die Verdichtung über die wenigstens eine von dem zweiten Gas oder Gasgemisch (A) angetriebene Antriebseinheit erfolgt und die eine oder mehrere Kompressionseinheiten das erste Gas oder Gasgemisch (B) verdichten, indem die Übertragung der mechanischen Leistung durch Kopplung der wenigstens einen Antriebseinheit an die wenigstens eine Kompressionseinheit erfolgt, wobei
(i) es sich bei dem ersten Gas oder Gasgemisch (B) um Biogas oder ein CO₂-haltiges Gas und dem zweiten Gas oder Gasgemisch (A) um Wasserstoff für die Methanisierung handelt, und/oder
(ii) es sich bei dem ersten Gas oder Gasgemisch (B) um Sauerstoff und dem zweiten Gas oder Gasgemisch (A) um Luft für die Gewinnung von Druckluft, zur Sauerstoffbegasung und/oder zur Ozonerzeugung handelt.

11. Vorrichtung nach Anspruch 10, **dadurch gekennzeichnet, dass** ferner wenigstens ein zuschaltbarer Nachverdichter, vorzugsweise ein hydraulisch angetriebener Kolbenverdichter, vorgesehen ist, der zusätzliche Antriebsleistung in die Verdichtungseinrichtung einkoppelt, wobei die Leistungsübertragung des wenigstens einen Nachverdichters entweder über eine mechanische oder fluidische Kopplung mit der wenigstens einen Antriebseinheit oder über eine mechanische oder fluidische Kopplung mit der wenigstens einen Kompressionseinheit erfolgt.

12. Vorrichtung nach Anspruch 10 oder 11, **dadurch gekennzeichnet, dass** kolbenförmige Strukturen vorgesehen sind, um die mechanische Leistung in der oder den Antriebseinheiten durch Umwandlung von Gasdruck in Kräfte und lineare Bewegungen zu erzeugen.

13. Vorrichtung nach Anspruch 11 oder 12, **dadurch gekennzeichnet, dass** Ventile vorgesehen sind, die einen Rückstrom des Ausgangsgasstroms der Kompressionseinheit verhindern, indem sie den Eingangsgasstrom des Nachverdichters von dem Ausgangsgasstrom des Nachverdichters trennen.

14. Vorrichtung nach einem der vorhergehenden Ansprüche, **dadurch gekennzeichnet, dass** die Antriebseinheit und/oder die Kompressionseinheit von jeweils einem in sich geschlossenen, isolierten Fluidsystem vollständig oder teilweise umgeben sind und über wenigstens einen Eingang und einen Ausgang eine Zirkulation eines fluiden Wärmeträgermediums zu bewirken, um einen thermischen Energieaustausch zu ermöglichen.

15. Vorrichtung nach einem der vorhergehenden Ansprüche, **dadurch gekennzeichnet, dass** die Antriebseinheit aus wenigstens einem Antriebszylinder mit Antriebskolben und die Kompressionseinheit aus wenigstens einem Kompressionszylinder besteht, wobei ferner mindestens ein Ventil vorgesehen ist, um das zweite Gas oder Gasgemisch (A) abwechselnd auf die beiden Kolbenseiten des Antriebskolbens zu beaufschlagen.

16. Vorrichtung nach einem der vorhergehenden Ansprüche, **dadurch gekennzeichnet, dass** die Antriebseinheit aus wenigstens einem Antriebszylinder mit Antriebskolben und die Kompressionseinheit aus wenigstens einem Kompressionszylinder besteht und dass die Antriebs- und Kompressionszylinder jeweils thermisch isoliert zueinander mit jeweils einem thermischen Auskopplungssystem ausgestattet sind und über jeweils mindestens einen Eingang und einen Ausgang pro System innerhalb jeweils eines geschlossenen Kreislaufs thermische Energie zu- oder abführen.

## Claims

1. A method for adapting the pressure levels of two gases or gas mixtures by means of pressure electrolysis for a methanation of biogases or CO₂-containing gases and/or for providing compressed air, for oxygen gassing and/or for ozone generation, in which a first gas or gas mixture (B) is provided, the pressure level of which is lower than the pressure level of the second gas or gas mixture (A), wherein the energy obtained from the expansion of the second gas or gas mixture (A), which is at a higher pressure level, is used to compress the first gas or gas mixture (B) in order to equalize the different pressure levels, wherein the compression takes place via at least one drive unit that is driven by the second gas or gas mixture (A) and compresses the first gas or gas mixture (B) in one or more compression units, in that the mechanical performance is transferred by coupling the at least one drive unit to the at least one compression unit, wherein
(i) the first gas or gas mixture (B) is biogas or CO₂-containing gas and the second gas or gas mixture (A) is hydrogen for methanation, and/or
(ii) the first gas or gas mixture (B) is oxygen and the second gas or gas mixture (A) is air for obtaining compressed air, for oxygen gassing and/or for ozone generation.

2. The method according to claim 1, **characterized in that** the first gas or gas mixture (B) is brought to an intended outlet pressure via post-compression if the mechanical performance released during the expansion of the second gas or gas mixture (A) is not sufficient for the intended compression of the first gas or gas mixture (B).

3. The method according to one of the preceding claims, **characterized in that** at least a target gas or a target gas mixture (AB) is produced, which is at a defined pressure level (pAB), wherein at least two outlet gases consisting of a first gas or gas mixture (B) and a second gas or gas mixture (A) are mixed together, wherein at least the second gas or gas mixture (A) expands from a higher pressure level (pA) than the pressure level (pAB) of the target gas or target gas mixture and wherein the first gas or gas mixture (B) is compressed in the compression device from a lower pressure level (pB) by the second gas or gas mixture (A) with a higher pressure level (pA), wherein pA>pAB>pB applies for the pressure ratios.

4. The method according to one of the preceding claims, **characterized in that** at least a target gas or target gas mixture with an almost constant volume flow is passed on to a downstream consumer.

5. The method according to one of the preceding claims, **characterized in that**, if necessary, the first gas or gas mixture (B) and/or the second gas or gas mixture (A) are passed on to the downstream consumer as a compressed gas mixture (AB) in a variably adjustable mixing ratio at a defined pressure level (pOAB) or the input gases are passed on separately at respectively defined pressure levels (pOA, pOB).

6. The method according to one of the preceding claims, **characterized in that** the mechanical coupling of the at least one drive unit and the compression units takes place via one or more mechanical shafts or via a hydraulic coupling.

7. The method according to one of the preceding claims, **characterized in that** the expansion of the second gas or gas mixture (A) and the compression of the first gas or gas mixture (B) take place via drive pistons in a double-acting manner, **in that** one piston side each drives the at least one drive unit and the at least one compression unit, while draining or suction takes place on the opposite piston side, leading to a compression in both lifting directions.

8. The method according to one of the preceding claims, **characterized in that** the volume and pressure ratios of the present pressure levels and gas quantities are adapted by adjusting the compression volume via at least one compression cylinder and/or at least one control valve.

9. The method according to one of the preceding claims, **characterized in that** the thermal energy flows developing during the pressure change processes are decoupled separately on the drive side and the compression side.

10. A device comprising a pressure electrolysis plant, at least one drive unit and at least one compression unit for adapting the pressure levels of two gases or gas mixtures by means of pressure electrolysis for the methanation of biogases or CO₂-containing gases and/or for providing compressed air, for oxygen gassing and/or ozone generation, by providing a first gas or gas mixture (B), the pressure level of which is lower than the pressure level of a second gas or gas mixture (A), wherein the energy obtained from the expansion of the second gas or gas mixture, which is at the higher pressure level, is used to compress the first gas or gas mixture (B), wherein the compression takes places via the at least one drive unit driven by the second gas or gas mixture (A) and wherein the one or more compression units compress the first gas or gas mixture (B), in that the mechanical performance is transferred by coupling the at least one drive unit to the at least one compression unit, wherein
(i) the first gas or gas mixture (B) is biogas or a CO₂-containing gas and the second gas or gas mixture (A) is hydrogen for methanation, and/or
(ii) the first gas or gas mixture (B) is oxygen and the second gas or gas mixture (A) is air for obtaining compressed air, for oxygen gassing and/or for ozone generation.

11. The device according to claim 10, **characterized in that** further at least one connectible post-compressor, preferably a hydraulically driven piston compressor, is provided, which couples additional drive power into the compression device, wherein the power transfer of the at least one post-compressor takes place either via a mechanical or fluidic coupling to the at least one drive unit or via a mechanical or fluidic coupling to the at least one compression unit.

12. The device according to claim 10 or 11, **characterized in that** piston-shaped structures are provided in order to generate the mechanical performance in the drive unit(s) by converting gas pressure into forces and linear movements.

13. The device according to claim 11 or 12, **characterized in that** valves are provided, which prevent a backflow of the outlet gas flow of the compression unit by separating the input gas flow of the post-compressor from the outlet gas flow of the post-compressor.

14. The device according to one of the preceding claims, **characterized in that** the drive unit and/or compression unit are each completely or partially surrounded by a coherent, isolated fluid system and cause a fluid heat transfer medium to circulate via at least one inlet and one outlet in order to enable a thermal energy exchange.

15. The device according to one of the preceding claims, **characterized in that** the drive unit consists of at least one drive cylinder with drive piston and the compression unit consists of at least one compression cylinder, wherein further at least one valve is provided in order to alternately apply the second gas or gas mixture (A) to both piston sides of the drive piston.

16. The device according to one of the preceding claims, **characterized in that** the drive unit consists of at least one drive cylinder with drive piston and the compression unit consists of at least one compression cylinder and **in that** the drive and compression cylinders, each thermally isolated to each other, are each equipped with a thermal decoupling system and each supply or discharge thermal energy via at least one inlet and one outlet per system within a closed circuit.

## Revendications

1. Procédé pour adapter des niveaux de pression de deux gaz ou mélanges gazeux par électrolyse sous pression pour une méthanisation de biogaz ou de gaz contenant du CO₂ et/ou pour fournir de l'air comprimé, pour une insufflation d'oxygène et/ou une production d'ozone, un premier gaz ou mélange gazeux (B) étant fourni, dont le niveau de pression est inférieur au niveau de pression d'un second gaz ou mélange gazeux (A), l'énergie obtenue à partir de la dilatation du second gaz ou mélange gazeux (A) se trouvant au niveau de pression le plus élevé étant utilisée pour comprimer le premier gaz ou mélange gazeux (B) afin d'équilibrer les différents niveaux de pression, la compression étant effectuée par au moins une unité d'entraînement qui est entraînée par le second gaz ou mélange gazeux (A) et le premier gaz ou mélange gazeux (B) étant comprimé dans une ou plusieurs unités de compression, la transmission de la puissance mécanique étant effectuée par couplage de la au moins une unité d'entraînement à la au moins une unité de compression,
(i) le premier gaz ou mélange gazeux (B) étant du biogaz ou un gaz contenant du CO₂ et le second gaz ou mélange gazeux (A) étant de l'hydrogène pour la méthanisation, et/ou
(ii) le premier gaz ou mélange gazeux (B) est de l'oxygène et le second gaz ou mélange gazeux (A) est de l'air pour la production d'air comprimé, l'insufflation d'oxygène et/ou la production d'ozone.

2. Procédé selon la revendication 1, **caractérisé en ce que** le premier gaz ou mélange gazeux (B) est amené à une pression de sortie prévue par l'intermédiaire d'une post-compression si la puissance mécanique libérée lors de la dilatation du second gaz ou mélange gazeux (A) n'est pas suffisante pour la compression prévue du premier gaz ou mélange gazeux (B).

3. Procédé selon l'une quelconque des revendications précédentes, **caractérisé en ce qu'**au moins un gaz cible ou un mélange gazeux cible (AB) est produit, qui se trouve à un niveau de pression défini (pAB), au moins deux gaz de sortie, constitués du premier gaz ou mélange gazeux (B) et du second gaz ou mélange gazeux (A), étant mélangés, au moins le second gaz ou mélange gazeux (A) se dilatant à partir d'un niveau de pression (pA) supérieur au niveau de pression (pAB) du gaz cible ou du mélange gazeux cible, et le premier gaz ou mélange gazeux (B) étant comprimé dans le dispositif de compression à partir d'un niveau de pression (pB) inférieur par le second gaz ou mélange gazeux (A) au niveau de pression (pA) supérieur, les conditions de pression pA > pAB > pB s'appliquant.

4. Procédé selon l'une quelconque des revendications précédentes, **caractérisé en ce qu'**au moins un gaz cible ou un mélange gazeux cible est délivré à un consommateur en aval avec un débit volumétrique presque constant.

5. Procédé selon l'une quelconque des revendications précédentes, **caractérisé en ce que**, si nécessaire, le premier gaz ou mélange gazeux (B) et/ou le second gaz ou mélange gazeux (A) en tant que mélange gazeux comprimé (AB) dans un rapport de mélange réglable de manière variable à un niveau de pression défini (pOAB) ou les gaz d'entrée sont délivrés séparément au consommateur en aval à des niveaux de pression définis (pOA, pOB).

6. Procédé selon l'une quelconque des revendications précédentes, **caractérisé en ce que** le couplage mécanique de la au moins une unité d'entraînement et des unités de compression s'effectue via un ou plusieurs arbres mécaniques ou via un couplage hydraulique.

7. Procédé selon l'une quelconque des revendications précédentes, **caractérisé en ce que** la dilatation du second gaz ou mélange gazeux (A) et la compression du premier gaz ou mélange gazeux (B) ont lieu à double effet par l'intermédiaire de pistons d'entraînement, un côté de piston entraînant respectivement la au moins une unité d'entraînement et la au moins une unité de compression, tandis qu'une vidange ou une aspiration a lieu au niveau du côté de piston opposé, ce qui provoque une compression dans les deux directions de course.

8. Procédé selon l'une quelconque des revendications précédentes, **caractérisé en ce que** les rapports de volume et de pression des niveaux de pression et des quantités de gaz existants sont adaptés, le volume de compression étant adapté via au moins un cylindre de compression et/ou au moins une vanne de commande.

9. Procédé selon l'une quelconque des revendications précédentes, **caractérisé en ce que** les flux d'énergie thermique générés pendant les processus de changement de pression sont découplés séparément du côté d'entraînement et du côté de compression.

10. Dispositif comprenant une installation d'électrolyse sous pression, au moins une unité d'entraînement et au moins une unité de compression, pour adapter les niveaux de pression de deux gaz ou mélanges gazeux par électrolyse sous pression pour la méthanisation de biogaz ou de gaz contenant du CO₂ et/ou pour fournir de l'air comprimé, pour une insufflation d'oxygène et/ou une production d'ozone, en fournissant un premier gaz ou mélange gazeux (B) dont le niveau de pression est inférieur au niveau de pression d'un second gaz ou mélange gazeux (A), l'énergie obtenue à partir de la dilatation du second gaz ou mélange gazeux (A) se trouvant au niveau de pression le plus élevé étant utilisée pour comprimer le premier gaz ou mélange gazeux (B), la compression étant effectuée par l'intermédiaire de la au moins une unité d'entraînement entraînée par le second gaz ou mélange gazeux (A) et des une ou plusieurs unités de compression comprimant le premier gaz ou mélange gazeux (B), la puissance mécanique étant transmise par couplage de la au moins une unité d'entraînement à la au moins une unité de compression,
(i) le premier gaz ou mélange gazeux (B) étant du biogaz ou un gaz contenant du CO₂ et le second gaz ou mélange gazeux (A) étant de l'hydrogène pour la méthanisation, et/ou
(ii) le premier gaz ou mélange gazeux (B) est de l'oxygène et le second gaz ou mélange gazeux (A) est de l'air pour la production d'air comprimé, l'insufflation d'oxygène et/ou la production d'ozone.

11. Dispositif selon la revendication 10, **caractérisé en ce qu'**est en outre prévu au moins un surpresseur commutable, de préférence un compresseur à piston à entraînement hydraulique, qui fait entrer une puissance d'entraînement supplémentaire dans le dispositif de compression, la transmission de puissance du au moins un surpresseur s'effectuant soit par un couplage mécanique ou fluidique avec la au moins une unité d'entraînement, soit par un couplage mécanique ou fluidique avec la au moins une unité de compression.

12. Dispositif selon la revendication 10 ou 11, **caractérisé en ce que** des structures en forme de piston sont prévues pour générer la puissance mécanique dans la ou les unités d'entraînement en convertissant la pression de gaz en forces et en déplacements linéaires.

13. Dispositif selon la revendication 11 ou 12, **caractérisé en ce que** des vannes sont prévues pour empêcher un reflux du flux de gaz de sortie de l'unité de compression en séparant le flux de gaz d'entrée du surpresseur du flux de gaz de sortie du surpresseur.

14. Dispositif selon l'une quelconque des revendications précédentes, **caractérisé en ce que** l'unité d'entraînement et/ou l'unité de compression sont chacune entièrement ou partiellement entourées par un système de fluide isolé et autonome et provoquent une circulation d'un milieu caloporteur fluide via au moins une entrée et une sortie afin de permettre un échange d'énergie thermique.

15. Dispositif selon l'une quelconque des revendications précédentes, **caractérisé en ce que** l'unité d'entraînement est composée d'au moins un cylindre d'entraînement avec un piston d'entraînement et l'unité de compression est composée d'au moins un cylindre de compression, au moins une vanne étant en outre prévue pour solliciter le second gaz ou mélange gazeux (A) alternativement sur les deux côtés de piston du piston d'entraînement.

16. Dispositif selon l'une quelconque des revendications précédentes, **caractérisé en ce que** l'unité d'entraînement se compose d'au moins un cylindre d'entraînement avec un piston d'entraînement, et l'unité de compression d'au moins un cylindre de compression, et **en ce que** les cylindres d'entraînement et de compression sont conçus isolés thermiquement l'un de l'autre à l'aide d'un système de découplage thermique respectif, et alimentent ou évacuent de l'énergie thermique respectivement via au moins une entrée et une sortie par système dans un circuit fermé respectif.
